(19) **Europäisches Patentamt**
**European Patent Office**
**Office européen des brevets**

(11) **EP 4 462 219 B1**

(12) **FASCICULE DE BREVET EUROPEEN**

(45) Date de publication et mention
de la délivrance du brevet:
**20.05.2026 Bulletin 2026/21**

(21) Numéro de dépôt: **24164208.1**

(22) Date de dépôt: **18.03.2024**

(51) Classification Internationale des Brevets (IPC):
**G05D 1/485** *(2024.01)* **G05D 1/644** *(2024.01)*
**B64C 27/04** *(2006.01)* **G08G 5/00** *(2025.01)*
**B64C 27/00** *(2006.01)* **G05D 1/00** *(2024.01)*
**G08G 5/21** *(2025.01)* **G08G 5/32** *(2025.01)*
**G08G 5/72** *(2025.01)* **G08G 5/74** *(2025.01)*
**G08G 5/76** *(2025.01)*

(52) Classification Coopérative des Brevets (CPC):
**G05D 1/644; G05D 1/485; G08G 5/21; G08G 5/32;
G08G 5/723; G08G 5/74; G08G 5/76;** B64C 27/04;
G05D 2105/22; G05D 2109/25

(54) **PROCÉDÉ ET DISPOSITIF DE ROUTAGE POUR UN AÉRONEF BIMOTEUR AYANT UN MODE DE FONCTIONNEMENT ÉCONOMIQUE**

VERFAHREN UND VORRICHTUNG ZUM ROUTEN EINES ZWEIMOTORIGEN FLUGZEUGS MIT ÖKONOMISCHEM BETRIEBSMODUS

ROUTING METHOD AND DEVICE FOR A TWO-ENGINE AIRCRAFT HAVING AN ECONOMICAL OPERATING MODE

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priorité: **12.05.2023 FR 2304721**

(43) Date de publication de la demande:
**13.11.2024 Bulletin 2024/46**

(73) Titulaire: **Airbus Helicopters
13725 Marignane Cedex (FR)**

(72) Inventeurs:
• **EVRARD, Jean-Philippe
13012 Marseille (FR)**

• **ESTERLE, Florent
13300 Salon De Provence (FR)**

(74) Mandataire: **GPI Brevets
1330, rue Guillibert de la Lauzière
EuroParc de Pichaury
Bât B2
13856 Aix en Provence Cedex 3 (FR)**

(56) Documents cités:
US-A1- 2018 301 040    US-A1- 2020 362 753
US-A1- 2022 122 468    US-A1- 2022 204 180
US-B1- 9 193 442        US-B2- 11 486 710

EP 4 462 219 B1

**Description**

La présente invention est du domaine des systèmes d'assistance à la navigation d'un aéronef.

La présente invention concerne un procédé et un dispositif de routage pour un aéronef bimoteur ayant un mode de fonctionnement économique.

La présente invention est destinée aux aéronefs à voilure tournante munis d'au moins deux moteurs thermiques et d'au moins un rotor, les moteurs thermiques entraînant en rotation le ou les rotors respectifs de ces aéronefs.

Un aéronef à voilure tournante comporte au moins un rotor pouvant être entraîné en rotation par au moins deux moteurs thermiques. Les moteurs thermiques sont en outre surdimensionnés pour permettre l'entrainement du rotor avec un seul moteur, en cas de panne d'un autre moteur. Un tel aéronef comporte un mode de fonctionnement dit « total » ou « *AEO* » pour la désignation en langue anglaise « All Engines Operative » dans lequel chaque moteur thermique fournit une puissance mécanique non nulle audit au moins un rotor, les moteurs thermiques fournissant conjointement et de façon sensiblement symétrique la puissance mécanique requise audit au moins un rotor.

Afin de diminuer la consommation de carburant des moteurs thermiques de l'aéronef, un mode de fonctionnement dit « économique » peut être utilisé, principalement durant une phase de vol de croisière. Selon ce mode de fonctionnement économique, un seul moteur thermique fournit la puissance nécessaire pour entraîner en rotation le rotor de l'aéronef. Le ou les autres moteurs thermiques ne fournissent pas de puissance mécanique significative, voire ne fournissent aucune puissance. Ce mode de fonctionnement économique est donc un fonctionnement asymétrique des moteurs thermiques, les moteurs thermiques ne fonctionnant pas de façon identique.

Un tel mode de fonctionnement économique est intéressant mais doit être employé judicieusement. En effet, le mode de fonctionnement économique peut permettre d'obtenir un gain en consommation pour réduire directement le coût du vol, son empreinte environnementale ou pour améliorer les performances de l'aéronef en augmentant la distance franchissable par l'aéronef ou sa masse transportable. Toutefois, le mode de fonctionnement économique peut être limité à un certain domaine de vol, d'une part pour que la sécurité du vol soit toujours assurée, et d'autre part pour que l'installation motrice fournisse la puissance requise pour la phase de vol courante.

Par exemple, le mode de fonctionnement économique doit être engagé avec une hauteur de sécurité minimale par rapport au sol survolé afin de permettre, en cas de panne du moteur entraînant le rotor, de réactiver un autre moteur.

Selon un autre exemple, lors de phases de vol d'avancement à grande vitesse, l'aéronef nécessite une puissance motrice importante que ne peut pas fournir le mode de fonctionnement économique sans risque d'un endommagement spécifique du moteur thermique et/ou de la chaîne de transmission mécanique, cet endommagement étant susceptible d'engendrer alors des coûts de maintenance supplémentaires.

Ainsi, le mode de fonctionnement économique entraîne une réduction de la vitesse de l'aéronef augmentant en conséquence le temps de vol et, par suite, le coût opérationnel de ce vol.

Dans ces cas, les coûts induits par le temps de vol augmenté et/ou par les coûts de maintenance supplémentaires peuvent s'avérer supérieurs au gain obtenu par la baisse de consommation de carburant ou l'amélioration des performances de l'aéronef.

Selon un autre exemple, selon les conditions opérationnelles de l'aéronef, telles que le vent, la température extérieure ou encore l'altitude, les performances d'un moteur thermique fluctuent. Ces conditions peuvent avoir une influence sur la puissance développée par le moteur thermique et/ou sa consommation de carburant. De fait, l'utilisation du mode de fonctionnement économique peut s'avérer moins économique dans ces conditions qu'un mode de fonctionnement traditionnel des moteurs thermiques en vol, voire impossible.

Enfin, l'introduction de nouvelles énergies telles que des biocarburants, qui permettent une réduction des émissions polluantes mais dont les coûts sont significativement supérieurs aux carburants fossiles, ainsi que l'introduction de nouveaux schémas de taxation des émissions de carbone amènent une variabilité supplémentaire qui doit être intégrée à la réflexion d'un opérateur de l'aéronef sur le meilleur usage qui peut en être fait de ces biocarburants dans le cadre de ce mode de fonctionnement économique.

Dès lors, choisir d'utiliser ou non le mode de fonctionnement économique s'avère être un problème technique complexe, tant vis-à-vis des enjeux de sécurité que des enjeux économiques pour l'opérateur.

Par ailleurs, l'établissement d'un routage comporte l'établissement d'un plan de vol entre les points de départ et d'arrivée, une route entre les points de départ et d'arrivée comportant des points de passage successifs auxquels sont associées une altitude, voire une vitesse d'avancement. Des heures de départ et d'arrivée estimées ou encore la durée de vol estimée peuvent aussi être associées à la route. Un plan de vol peut également comporter d'éventuelles étapes intermédiaires.

Les données et les paramètres intervenant classiquement dans l'établissement d'un routage comportent notamment les conditions météorologiques actuelles et prévisionnelles entre les points de départ et d'arrivée ainsi que des données de terrain contenant le relief et les éventuels obstacles connus. Des informations de performance de l'aéronef peuvent également être prises en compte pour établir le plan de vol.

L'écologie et la préservation de l'environnement sont également de plus en plus prises en compte aujourd'hui afin d'établir le routage d'un aéronef, par exemple pour limiter ses émissions polluantes et/ou la génération de bruit en particulier à proximité de zones habitées.

Le document US 10262545 décrit un système pour déterminer des paramètres opérationnels d'un aéronef à voilure tournante, dont le plan de vol, en optimisant son coût de fonctionnement. Notamment, le système reçoit des données d'entrée, et fournit, notamment en vol et en temps réel, des paramètres opérationnels de l'aéronef en appliquant un modèle de coût. Les données d'entrée prises en compte incluent des stratégies de missions, des données issues de capteurs de l'aéronef, telles que la vitesse, l'altitude, l'attitude, les vitesses et accélérations angulaires de l'aéronef ainsi que des données d'endommagement d'équipements de l'aéronef, par exemple des moteurs, des coûts de maintenance. Les paramètres opérationnels comprennent par exemple un plan de vol et une pluralité de paramètres optimisés associés au plan de vol. Ces paramètres optimisés comportent par exemple le mode de fonctionnement des moteurs de l'aéronef, par exemple en équilibrant la puissance fournie par plusieurs moteurs ou en utilisant un mode de fonctionnement dans lequel un moteur est arrêté en vol afin de réduire la consommation de carburant.

Le document EP 2763083 concerne quant à lui un procédé de traitement d'itinéraires générant plusieurs itinéraires en fonction de points d'intérêt et de caractéristiques environnementales, en particulier la pollution de l'air et la pollution sonore générées par l'aéronef et/ou économiques, en particulier sa consommation de carburant ou sa durée de vol. Des valeurs de performance peuvent être associées à chaque nouvel itinéraire.

Les documents US 2020/0362753, US 2022/0122468 et US 9193442 sont également connus.

La présente invention a alors pour objet un procédé et un système de routage pour aéronef comportant au moins deux moteurs thermiques permettant une prise en compte optimale d'un mode de fonctionnement économique de l'aéronef pour optimiser la consommation en carburant de l'aéronef, et par suite le coût opérationnel du vol.

Tout d'abord, la présente invention concerne un procédé de routage pour un aéronef muni d'au moins un rotor et d'au moins deux moteurs thermiques entraînant en rotation ledit au moins un rotor, l'aéronef possédant un régulateur configuré pour réguler les moteurs thermiques au moins selon un premier mode de fonctionnement dit « *AEO* » dans lequel chaque moteur thermique fournit une puissance mécanique non nulle audit au moins un rotor, les moteurs thermiques fournissant conjointement et de façon sensiblement symétrique la puissance mécanique requise audit au moins un rotor, et un second mode de fonctionnement dit « économique » dans lequel au moins un des deux moteurs thermiques ne fournit pas de puissance mécanique audit au moins un rotor. Le procédé comporte les étapes suivantes :

- paramétrage de paramètres d'un plan de vol comprenant :

  ○ un point de départ du plan de vol, et
  ○ un point d'arrivée du plan de vol,

- détermination à l'aide d'un calculateur de plusieurs routes possibles entre le point de départ et le point d'arrivée, en fonction des paramètres du plan de vol et de plusieurs données comprenant au moins des données de performance de l'aéronef, des données de santé de l'aéronef, des données météorologiques, et des données environnementales, la détermination comprenant :

  ○ détermination d'au moins une première route dite « *AEO* » utilisant uniquement le premier mode de fonctionnement *AEO*,
  ○ détermination d'au moins une seconde route dite « économique » utilisant le second mode de fonctionnement économique et le premier mode de fonctionnement AEO,

- estimation à l'aide du calculateur d'un coût opérationnel de chaque route possible, en fonction de modèles de coût associés aux différents modes de fonctionnement de l'aéronef, l'estimation comprenant :

  ○ estimation d'au moins un premier coût dit « *AEO* » associé respectivement à ladite au moins une première route,
  ○ estimation d'au moins un second coût dit « économique » associé respectivement à ladite au moins une seconde route,

- comparaison des premier et second coûts,
- sélection à l'aide du calculateur d'une route parmi les première et seconde routes selon la comparaison des premier et second coûts.

Le procédé selon l'invention permet ainsi de sélectionner automatiquement la route permettant de minimiser le coût opérationnel du vol, ou d'optimiser ce coût opérationnel en combinaison avec un ou plusieurs autres critères, et en prenant en compte au cours du vol les premier et second modes de fonctionnement ainsi que les conditions d'utilisation du second mode de fonctionnement économique.

Le procédé selon l'invention permet ainsi avantageusement d'assister un opérateur de l'aéronef dans la préparation du vol en permettant une optimisation du coût opérationnel du vol, grâce à une utilisation optimisée des modes de fonctionnement de l'aéronef et en particulier du second mode de fonctionnement économique.

En effet, une utilisation inappropriée de ce second mode de fonctionnement économique peut générer plus d'inconvénients que de bénéfices, provoquant par exemple un allongement de la durée du vol non compensé économiquement par une baisse de la consommation en carburant.

Dans ce but, plusieurs routes possibles sont calculées parallèlement et indépendamment en fonction des paramètres d'un plan de vol, à savoir les points de départ et d'arrivée ainsi qu'éventuellement d'un ou de plusieurs points de passage et/ou d'un ou de plusieurs corridors de passage. D'autres contraintes peuvent également être à respecter pour le plan de vol, telles qu'une durée maximale du vol un horaire d'arrivée et/ou une charge utile à transporter par exemple.

Les corridors de passage définissent des zones dans lesquelles l'aéronef doit évoluer, par exemple avec une altitude minimale et une altitude maximale pour les phases de vol de croisière. Les corridors de passage permettent également de définir des zones où le vol est interdit. De préférence, plusieurs première routes et plusieurs secondes routes sont calculées.

Les routes possibles sont également calculées en fonction de plusieurs données relatives d'une part à l'aéronef et d'autre part à l'environnement du vol.

Ainsi, des données de performance de l'aéronef peuvent être prises en compte. Ces données de performance permettent de définir les performances de l'aéronef, telles que les limitations du domaine de vol autorisé, la vitesse maximale de l'aéronef, la puissance disponible au niveau de chaque moteur thermique ainsi que leur consommation et comportent par exemple des premières données de performance correspondant au premier mode de fonctionnement AEO de l'aéronef, et des secondes données de performance correspondant au second mode de fonctionnement économique de l'aéronef.

Ces données de performance comportent par exemple des abaques ou des lois permettant de connaître la vitesse maximale de l'aéronef, la puissance disponible pour chaque moteur thermique et sa consommation en carburant, en fonction de conditions opérationnelles, telles que l'altitude, la masse totale de l'aéronef, la température extérieure ainsi que la pression atmosphérique, les capacités calorifiques du carburant utilisé. Ces données de performance peuvent aussi comporter des marges moteur liées à l'utilisation ou à l'endommagement des moteurs thermiques ainsi que la configuration spécifique de l'aéronef, comportant notamment le type d'entrée d'air et de tuyère pour recaler les performances théoriques sur les performances réelles de chaque moteur thermique.

Des données de santé de l'aéronef peuvent également être prises en compte et comprennent des données relatives notamment à l'utilisation et à l'endommagement des moteurs thermiques et d'une chaîne de transmission mécanique reliant mécaniquement lesdits au moins deux moteurs thermiques et ledit au moins un rotor. Une telle chaîne de transmission mécanique peut comporter notamment une boîte de transmission principale chargée de transmettre la puissance mécanique délivrée par les moteurs thermiques vers le rotor. Ces données de santé comprennent, par exemple, un ou plusieurs compteurs dits « moteur » associé à chaque moteur thermique, chaque compteur moteur caractérisant des données d'usage liées à l'utilisation ou à l'endommagement d'un moteur thermique. Un compteur moteur peut par exemple comptabiliser les heures de fonctionnement du moteur thermique, l'endommagement par fluage qu'il a subi, ainsi que les nombres de cycles d'un générateur de gaz et d'une turbine libre d'un turbomoteur.

Ces données de santé peuvent comprendre au moins deux compteurs dits « transmission » associés par exemple respectivement à des arbres d'entrée de la boîte de transmission principale, les arbres d'entrée étant reliés mécaniquement respectivement aux moteurs thermiques, chaque compteur transmission caractérisant des données d'usage liées à l'utilisation ou à l'endommagement d'un arbre d'entrée. Un compteur transmission peut par exemple comptabiliser le nombre de cycles entrée-sortie du second mode de fonctionnement économique d'une roue libre de la boîte de transmission principale ou le nombre d'heures de fonctionnement d'un arbre d'entrée ou encore sa durée d'utilisation dans ce second mode de fonctionnement économique.

Des données météorologiques peuvent encore être prises en compte et comprennent des données relatives au vent et à la température entre les points de départ et d'arrivée inclus ainsi qu'éventuellement aux points de passage et/ou dans les corridors de passage. Ces données météorologiques peuvent également comporter la présence de zones de givrage ou d'intempéries entre les points de départ et d'arrivée qui peuvent être incompatibles avec l'utilisation du second mode de fonctionnement économique. Ces données météorologiques peuvent comporter des données mesurées ainsi que des prévisions.

Enfin, des données environnementales peuvent aussi être prises en compte et comprennent une base de données terrain permettant la prise en compte du relief ainsi qu'éventuellement d'obstacles artificiels pour établir les routes possibles. La base de données terrain peut aussi comprendre les zones habitées, éventuellement avec la densité de population associée, afin de pouvoir prendre en compte, si besoin, les nuisances environnementales, qu'elles soient relatives au bruit ou à la pollution de l'air vis-à-vis de ces zones habitées.

Ces différentes données peuvent être stockées dans une mémoire du calculateur ou une mémoire reliée au calculateur.

Les routes possibles peuvent être établies parallèlement et indépendamment par le calculateur, en appliquant par exemple un algorithme connu de calcul d'une route. Une route possible peut être définie par une succession de points de navigation reliés entre eux par des segments de vol. Ces segments de vol peuvent être formés par exemple par des lignes droites, par des lignes curvilignes ou encore par des arcs de cercle.

Ensuite, l'estimation d'un coût opérationnel de chaque route possible peut être réalisée, en fonction de modèles de coût associés aux différents modes de fonctionnement de l'aéronef. Ces modèles de coût comprennent un premier modèle de coût AEO associé au premier mode de fonctionnement AEO et un second modèle de coût économique associé au second mode de fonctionnement économique. Les premier et second modèles de coût intègrent notamment les coûts liés au carburant utilisé, aux coûts horaires de vol de l'aéronef, aux coûts de maintenance de l'aéronef ainsi que le coût lié à l'équipage de l'aéronef.

Les premier et second modèles de coût permettent d'estimer les premiers et seconds coûts opérationnels respectivement des premières et secondes routes possibles en fonction des caractéristiques de ces routes possibles. Par exemple, le coût opérationnel d'une route est estimé notamment en fonction de l'altitude des points de passage, de la durée du vol ainsi que du mode de fonctionnement utilisé sur chaque segment de ces routes possibles.

La comparaison des premiers et seconds coûts peut permettre ainsi de classer les différentes premières et secondes routes selon les valeurs de leurs premiers et seconds coûts respectifs. Cette comparaison des premiers et seconds coûts peut aussi permettre de déterminer le premier coût le plus faible parmi les premiers coûts et le second coût le plus faible parmi les seconds coûts et/ou le coût opérationnel le plus faible parmi les premiers coûts et les seconds coûts.

Enfin, le procédé selon l'invention permet, à partir de la pluralité de routes possibles calculées, de sélectionner une route parmi toutes les premières et secondes routes établies en fonction des coûts opérationnels de ces routes possibles. La route ainsi sélectionnée permet une intégration optimisée du second mode de fonctionnement économique dans le plan de vol permettant par exemple de minimiser le coût opérationnel du vol, ou d'optimiser ce coût opérationnel en combinaison avec un ou plusieurs autres critères. Cette étape de sélection est réalisée de façon automatique, par l'intermédiaire du calculateur, par exemple en appliquant une simulation de « Monte Carlo » réalisée éventuellement de manière orientée et non aléatoire par un échantillonneur dit *TPE* pour l'expression en langue anglaise « Tree-structured Parsen Estimator ». En fonction de la situation, la route sélectionnée peut comprendre ou ne pas comprendre au moins un segment sollicitant la mise en œuvre du second mode de fonctionnement économique.

Le procédé de routage pour aéronef selon l'invention peut de plus comprendre une ou plusieurs des caractéristiques qui suivent, prises seules ou en combinaison.

Selon une possibilité, la comparaison des premiers et seconds coûts peut être effectuée sur le seul critère du coût opérationnel, la route sélectionnée étant la route possible ayant le coût opérationnel le plus faible parmi les premiers et seconds coûts.

Alternativement, la comparaison des premiers et seconds coûts peut être effectuée sur le critère du coût opérationnel combiné avec un critère complémentaire.

Ce critère complémentaire peut être, par exemple, choisi parmi la durée de vol, les nuisances environnementales, à savoir le bruit ou la pollution de l'air, les conditions météorologiques, pour éviter un orage par exemple, la disponibilité d'aires d'atterrissage de secours.

Selon une autre possibilité compatible avec les précédentes, le second mode de fonctionnement économique peut comporter un premier mode d'utilisation, pour lequel un seul moteur thermique parmi lesdits au moins deux moteurs thermiques fonctionne et assure seul l'entraînement en rotation dudit au moins un rotor, ledit au moins un autre moteur thermique étant arrêté et non alimenté en carburant, et un second mode d'utilisation, pour lequel un seul moteur thermique parmi lesdits au moins deux moteurs thermiques fournit une puissance mécanique audit au moins un rotor, pour l'entraîner en rotation, ledit au moins un autre moteur thermique étant démarré et alimenté en carburant, ne fournissant aucune puissance mécanique audit au moins un rotor.

Selon une autre possibilité compatible avec les précédentes, chaque seconde route peut comporter plusieurs segments de vols successifs entre les points de départ et d'arrivée, et, le calculateur peut déterminer pour chaque segment un mode de fonctionnement de l'aéronef, parmi le second mode de fonctionnement économique et le premier mode de fonctionnement AEO, en fonction des caractéristiques du segment, par exemple son altitude, sa position, son orientation, sa longueur, et des données précédemment citées. En particulier, le second mode de fonctionnement économique est associé à un segment dont les caractéristiques correspondent au domaine autorisé de ce mode de fonctionnement. De même, tous les segments de vols d'une première route sont associés au premier mode de fonctionnement AEO.

En outre, le calculateur peut déterminer, pour chaque segment auquel le second mode de fonctionnement économique est associé, une information indiquant le moteur thermique parmi les moteurs thermiques qui doit fournir une puissance mécanique audit au moins un rotor.

Cette information peut ainsi permettre d'alterner le fonctionnement de plusieurs moteurs durant plusieurs vols successifs, voire sur un même vol, afin d'équilibrer l'utilisation et/ou l'endommagement des moteurs ainsi que des arbres d'entrée associés d'une boîte de transmission principale à laquelle est relié chaque moteur thermique. Cette information peut être déterminée en fonction des données de santé de l'aéronef, et en particulier des compteurs moteurs et des compteurs transmission. En conséquence, la maintenance des moteurs thermiques et de la boîte de transmission principale peut être optimisée.

Selon une autre possibilité compatible avec les précédentes, le procédé peut comporter une étape de déplacement de l'aéronef entre les points de départ et d'arrivée selon la route sélectionnée.

De la sorte, ce vol est réalisé avec un coût opérationnel minimum ou bien optimisé en fonction d'un critère complémentaire.

Dans ce but, le procédé peut aussi comporter préalablement une étape de transmission de la route sélectionnée à un dispositif de gestion de vol de l'aéronef en vue de la mise en œuvre de cette étape de déplacement de l'aéronef.

Selon un autre exemple compatible avec les précédents, le procédé peut comporter une étape d'affichage de la route sélectionnée sur un dispositif d'affichage, tel un écran par exemple, afin de permettre à l'opérateur de visualiser la route sélectionnée.

Selon un autre exemple compatible avec les précédents, les données de performance peuvent être spécifiques aux moteurs thermiques de l'aéronef concerné, prenant en compte notamment les performances réelles, notamment en termes de puissance, de consommation, et d'endommagement, spécifiques à chacun de ces moteurs thermiques, voire le vieillissement de la chaîne de transmission entre chaque moteur thermique et le rotor. Une mise à jour de ces données de performance peut, par exemple, être effectuée suite à une opération de maintenance, une opération de surveillance ou un diagnostic de santé effectué sur l'aéronef ou sur le moteur thermique plus spécifiquement.

Selon un autre exemple compatible avec les précédents, le procédé peut comporter une étape d'identification d'une ou de plusieurs aires d'atterrissage de secours sur la ou les secondes routes, dans le cas où le second mode de fonctionnement économique ne peut pas être réalisé sur au moins une partie de la route sélectionnée.

En effet, dans le cas où au moins une partie de ladite route sélectionnée ne peut être effectuée en sollicitant le second mode de fonctionnement économique prévu, la consommation en carburant de l'aéronef va augmenter, et l'aéronef pourrait ne pas pouvoir atteindre le point d'arrivée. Par exemple, un changement des conditions météorologiques, telles qu'une augmentation de la vitesse du vent ou un changement de température, ou la survenue d'une panne d'un système de l'aéronef peuvent empêcher l'utilisation du second mode de fonctionnement économique prévu.

L'identification d'une ou de plusieurs aires d'atterrissage de secours permet alors de déterminer une ou des aires d'atterrissage de secours situées à proximité d'une seconde route vers lesquelles l'aéronef peut être dérouté si le second mode de fonctionnement économique ne peut pas être réalisé sur au moins une partie de la route sélectionnée.

La présente invention vise aussi un programme d'ordinateur comprenant des instructions qui, lorsque le programme est exécuté, conduisent à mettre en œuvre le procédé selon l'invention précédemment décrit. Le programme est par exemple exécuté par un ordinateur ou un calculateur, comprenant au moins un processeur, au moins un circuit intégré, au moins un système programmable, au moins un circuit logique, et une mémoire, ces exemples ne limitant pas la portée donnée à l'expression « ordinateur » ou « calculateur ».

La mémoire permet de stocker le programme d'ordinateur ainsi que différentes informations utilisées par le programme d'ordinateur, à savoir les données de performance et les données de santé de l'aéronef, les modèles de coût associés à l'aéronef, des données météorologiques et des données environnementales.

La présente invention vise également un système de routage pour aéronef muni d'au moins un rotor, et d'au moins deux moteurs thermiques entraînant en rotation ledit au moins un rotor, l'aéronef possédant un second mode de fonctionnement économique dans lequel au moins un desdits au moins deux moteurs thermiques ne fournit pas de puissance mécanique audit au moins un rotor. Ce système de routage comporte au moins un calculateur, et au moins une mémoire stockant au moins une base de données, par exemple des données de performance et des données de santé de l'aéronef, des modèles de coût associés à l'aéronef, des données météorologiques et des données environnementales.

Ce système de routage est configuré pour la mise en œuvre du procédé précédemment décrit.

Le système de routage peut être un équipement n'appartenant pas à l'aéronef et de fait indépendant de l'aéronef. Le système de routage peut alors comporter au moins un émetteur d'informations et l'aéronef peut comporter au moins un dispositif de réception et au moins un dispositif de gestion de vol relié au dispositif de réception.

Le système de routage peut alternativement être intégré à l'aéronef et constituer à ce titre un équipement de l'aéronef. Le système de routage peut alors être relié à un dispositif de gestion de vol de l'aéronef. De plus, la route sélectionnée peut être affichée sur un écran du dispositif de gestion de vol ou sur un écran de l'aéronef.

Le système de routage peut comporter un dispositif d'affichage, tel un écran, afin d'afficher la route sélectionnée à l'attention d'un opérateur de l'aéronef.

La présente invention vise encore un ensemble de routage comportant un aéronef et un tel système de routage n'appartenant pas à l'aéronef. L'aéronef comporte au moins un dispositif de réception et au moins un dispositif de gestion de vol relié au dispositif de réception. Le système de routage comporte au moins un émetteur d'informations configuré pour coopérer avec le dispositif de réception de l'aéronef afin de transmettre les caractéristiques du plan de vol et la route sélectionnée au dispositif de réception qui les transfère au dispositif de gestion de vol de l'aéronef.

La présente invention vise enfin un aéronef comportant un système de routage.

L'invention et ses avantages apparaîtront avec plus de détails dans le cadre de la description qui suit avec des exemples donnés à titre illustratif en référence aux figures annexées qui représentent :

- la figure 1, un ensemble de routage pour aéronef,
- la figure 2, un schéma synoptique d'un procédé de routage pour aéronef,
- la figure 3, un graphique comportant des corridors d'un plan de vol, et
- la figure 4, un graphique représentant les coûts opérationnels de routes possible en fonction de deux critères.

Les éléments présents dans plusieurs figures distinctes sont affectés d'une seule et même référence.

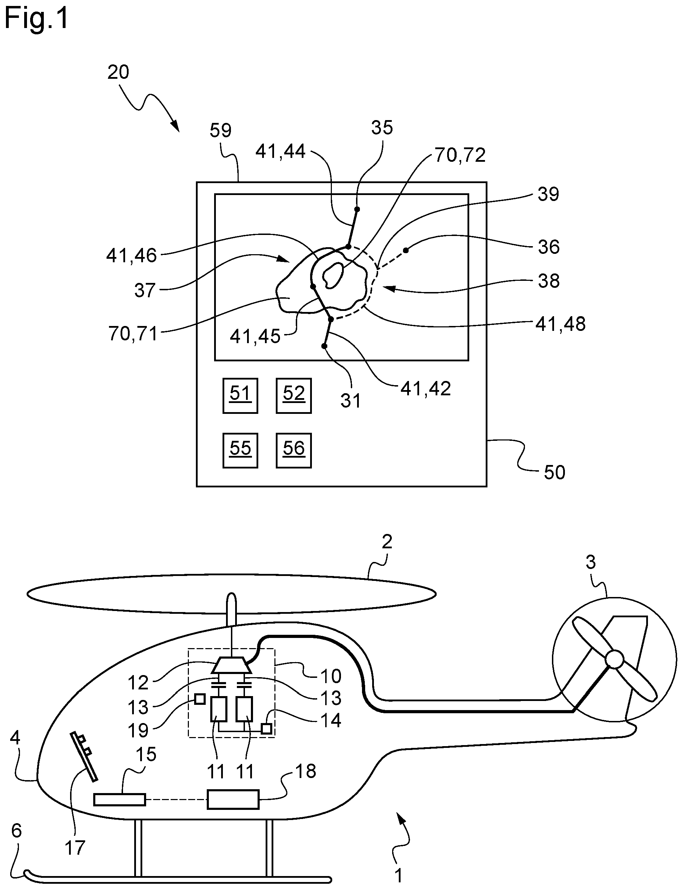

Un système 50 de routage pour aéronef est représenté sur la figure 1. Le système 50 de routage comporte un calculateur 55 et une mémoire 56. Un tel système 50 de routage peut également comporter un dispositif d'affichage 59, tel un écran, ainsi qu'un récepteur d'informations 52 et un émetteur d'informations 51. L'émetteur d'informations 51 et le récepteur d'informations 52 sont, par exemple, respectivement un récepteur et un émetteur d'ondes radio d'un dispositif de communication sans fil du système 50 de routage.

Un aéronef 1 auquel est destiné le système 50 de routage est un aéronef à voilure tournante, tel que représenté sur la figure 1, comportant un fuselage 4, un atterrisseur 6, une installation motrice 10 et au moins un rotor 2,3 entraîné en rotation par l'installation motrice 10. L'installation motrice 10 comporte au moins deux moteurs thermiques 11, un régulateur 14, régulant le fonctionnement des moteurs thermiques 11, et une boîte de transmission principale 12 agencée entre les moteurs thermiques 11 et le ou les rotors 2,3. La boîte de transmission principale 12 comporte des arbres 13 d'entrée reliés mécaniquement chacun et distinctivement à un des moteurs thermiques 11 par exemple à l'aide d'une roue libre de la boîte de transmission principale 12.

A titre d'exemple, l'aéronef 1 représenté sur la figure 1 comporte deux moteurs thermiques 11 et deux rotors 2,3, à savoir un rotor principal 2 agencé au-dessus du fuselage 4 et un rotor arrière 3 agencé sur une poutre de queue de l'aéronef 1.

Le régulateur 14 peut, par exemple, comporter autant de contrôleur moteur que l'installation motrice 10 comporte de moteurs thermiques 11. Chaque contrôleur moteur peut piloter le fonctionnement d'un moteur thermique 11 et enregistrer les données d'usage relative à ce moteur thermique 11. Un tel contrôleur moteur est, par exemple, un contrôleur d'un système connu sous l'acronyme *FADEC* pour la désignation en langue anglaise « Full Authority Digital Engine Control ».

En outre, l'aéronef 1 peut également comporter un dispositif d'affichage 17, un dispositif de réception 18 et un dispositif de gestion de vol 15 relié au dispositif de réception 18. Le dispositif de gestion de vol 15 peut par exemple être un système de pilotage automatique de l'aéronef 1 ou un dispositif FMS pour la désignation en langue anglaise « Flight Management System » qui fournit des informations au pilote de l'aéronef 1 en cours du vol sur une route à suivre, et par exemple des points clés de passage.

Enfin, l'aéronef 1 dispose d'une mémoire 19 chargée d'enregistrer les données d'usage de la boîte de transmission principale 12.

L'installation motrice 10 peut mettre en œuvre plusieurs modes de fonctionnement afin d'entraîner les rotors 2,3. Par exemple, dans un premier mode de fonctionnement dit « total » ou *« AEO »,* le régulateur 14 régule le fonctionnement des moteurs thermiques 11 de sorte que tous les moteurs 11 sont utilisés et fournissent chacun une puissance mécanique non nulle pour fournir conjointement la puissance mécanique nécessaire au bon fonctionnement des rotors 2,3 et de l'aéronef 1.

Alternativement, le régulateur 14 peut réguler le fonctionnement des moteurs thermiques 11 de sorte qu'un seul moteur 11 fournisse la puissance mécanique nécessaire au bon fonctionnement des rotors 2,3 et de l'aéronef 1 dans un second mode de fonctionnement dit « économique ». Le ou les autres moteurs thermiques 11 de l'installation motrice 10 ne fournissent alors pas de puissance mécanique significative aux rotors 2,3 Ce second mode de fonctionnement économique a pour but de réduire la consommation de carburant de l'installation motrice 10. Le second mode de fonctionnement économique est particulièrement destiné au vol de croisière.

Le second mode de fonctionnement économique peut comporter un premier mode d'utilisation, dans lequel le ou les moteurs thermiques 11 ne fournissant pas de puissance mécanique aux rotors 2,3 sont arrêtés et ne sont pas alimentés en carburant. Dans le cas où les moteurs thermiques 11 sont des turbomoteurs à turbine libre, les organes tournants du générateur de gaz de ce turbomoteur arrêté peuvent toutefois être maintenus en rotation à l'aide d'une machine électrique pour faciliter et accélérer le redémarrage de ce turbomoteur.

Le second mode de fonctionnement économique peut aussi comporter un second mode d'utilisation, dans lequel le ou les moteurs thermiques 11 ne fournissant pas de puissance mécanique aux rotors 2,3 sont démarrés et fonctionnent à un état de ralenti, ne fournissant à ce titre aucune puissance mécanique aux rotors 2,3.

Le second mode de fonctionnement économique peut permettre, lorsqu'il est utilisé à bon escient, d'obtenir une économie financière en réduisant la consommation de carburant, éventuellement afin d'augmenter la distance franchissable de l'aéronef 1 ou la charge utile pour une quantité de carburant donnée.

Toutefois, dans des conditions non adaptées, le second mode de fonctionnement économique peut être contreproductif. Par exemple, dans ce second mode de fonctionnement économique, la vitesse d'avancement de l'aéronef 1 est réduite, ce qui allonge la durée de vol et peut contribuer à augmenter le coût total du vol. De plus, dans ce second mode de fonctionnement économique, l'installation motrice 10 fonctionne de façon dissymétrique ce qui peut avoir un effet sur les opérations de maintenance, et le coût associé.

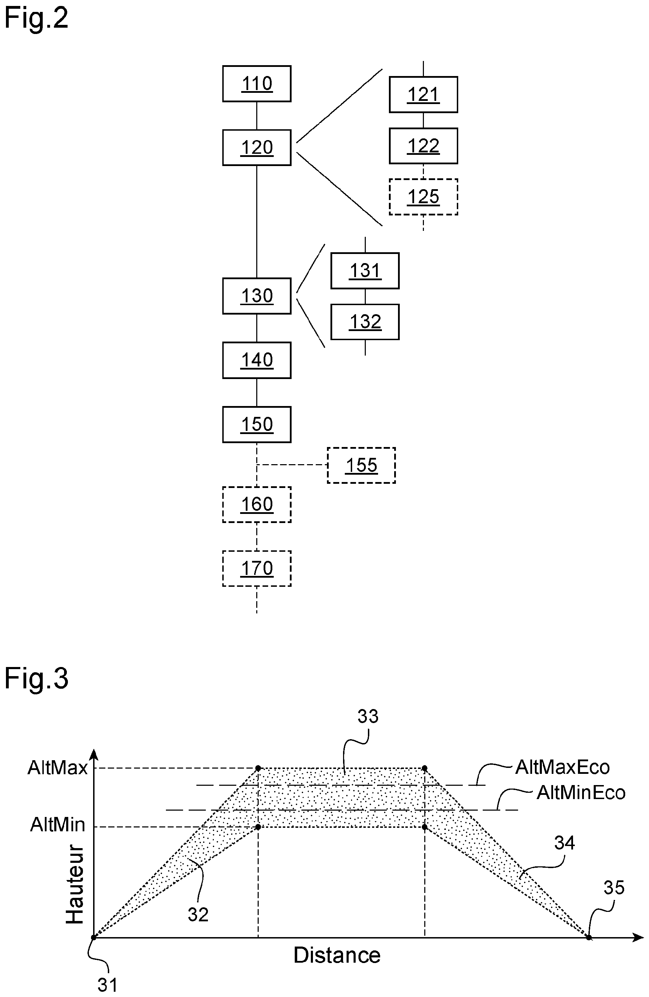

Le système 50 de routage selon l'invention permet de répondre à ce problème en assistant un opérateur de l'aéronef 1 dans l'établissement d'un plan de vol en prenant en compte les premier et second modes de fonctionnement. Le système 50 de routage est en effet configuré pour mettre en œuvre un procédé de routage pour aéronef dont un schéma synoptique est représenté sur la figure 2.

Dans ce but, la mémoire 56 peut stocker des instructions et/ou un programme d'ordinateur permettant notamment d'exécuter ce procédé de routage. Le calculateur 55 du système 50 de routage permet l'exécution de ce procédé de routage pour aéronef.

En outre, le système 50 de routage peut être indépendant de l'aéronef 1 et peut coopérer avec l'aéronef 1 comme indiqué sur la figure 1.

Le dispositif de réception 18 de l'aéronef 1 peut coopérer avec l'émetteur d'informations 51 du système 50 de routage afin de recevoir des caractéristiques d'un plan de vol, et en particulier les caractéristiques d'une route sélectionnée par le système 50 de routage, puis de les transférer au dispositif de gestion de vol 15 de l'aéronef 1 en vue de la réalisation d'un vol de l'aéronef 1 suivant cette route sélectionnée.

De plus, le système 50 de routage et l'aéronef 1 peuvent former un ensemble de routage 20.

Alternativement, le système 50 de routage peut être intégré à l'aéronef 1 et constituer un équipement de cet aéronef 1.

Le procédé de routage comporte les étapes suivantes.

Tout d'abord, au cours d'une étape de paramétrage 110 de paramètres du plan de vol, les paramètres de vol de la mission envisagée sont définis. Cette étape de paramétrage 110 permet de définir un point de départ 31 et un point d'arrivée 35. Cette étape de paramétrage 110 permet de la sorte d'initialiser le plan de vol.

Les point de départ 31 et d'arrivée 35 sont représentés sur la figure 1, sur le dispositif d'affichage 59 ainsi que sur la figure 3. De plus, des corridors 32-34 sont également représentés sur la figure 3 et définissent des zones dans lesquelles l'aéronef 1 doit évoluer. Par exemple, le plan de vol peut comporter un corridor de décollage 32 démarrant au point de départ 31, un corridor de croisière 33 et un corridor d'arrivée 34 se terminant au point d'arrivée 35. Le corridor de croisière 33 permet par exemple de définir une hauteur minimale ALTMin et une hauteur maximale ALTMax par rapport au sol survolé pour les phases de vol de croisière.

Des limitations de hauteur minimale ALTMinEco et maximale ALTMaxEco par rapport au sol survolé relatives au domaine de vol autorisé dans le second mode de fonctionnement économique sont également représentées sur la figure 3.

La hauteur minimale ALTMin et la limitation de hauteur minimale ALTMinEco répondent notamment à des paramètres de sécurité afin d'assurer une marge de hauteur suffisante pour une reprise en main de l'aéronef 1 en cas de panne moteur. Ces hauteurs sont donc différentes selon le mode de fonctionnement et le nombre de moteurs en fonctionnement. En outre, la limitation d'altitude minimale ALTMinEco peut comporter des limitations différentes et spécifiques pour les premier et second modes d'utilisation relatifs au second de fonctionnement économique.

D'autres paramètres du plan de vol peuvent être définis lors de l'étape de paramétrage 110. Par exemple, une durée maximale du vol, un ou plusieurs points de passage, et/ou une heure fixe ou bien un intervalle horaire pour le départ et/ou pour l'arrivée peuvent être paramétrés. Des paramètres spécifiques à la mission, tels que la charge utile ou le type de vol, par exemple un vol à vue ou un vol aux instruments, peuvent aussi être définis.

Ces paramètres de vol sont généralement paramétrés par un opérateur de l'aéronef 1. Par exemple, les points de départ 31 et d'arrivée 35 peuvent par exemple être saisis directement sur une carte affichée sur le dispositif d'affichage 59 ou bien en saisissant leurs coordonnées via un dispositif de saisie adapté.

Ensuite, le procédé comporte une étape de détermination 120 pour déterminer, avec le calculateur 55 et à l'aide d'algorithme connu de calcul de routes, plusieurs routes possibles 37,38 reliant le point de départ 31 au point d'arrivée 35 en fonction de plusieurs données et en prenant en compte les paramètres du plan de vol. Cette étape de calcul 120 est réalisée préalablement au décollage de l'aéronef 1.

L'étape de calcul 120 comporte une première sous-étape de calcul 121 pour calculer, avec le calculateur 55, une ou plusieurs premières routes 37, au cours desquelles l'aéronef 1 utiliserait uniquement le premier mode de fonctionnement AEO.

L'étape de calcul 120 comporte une deuxième sous-étape de calcul 122 pour calculer, avec le calculateur 55, une ou plusieurs secondes routes 38, au cours desquelles l'aéronef 1 utiliserait au moins partiellement le second mode de fonctionnement économique et le premier mode de fonctionnement AEO. Dans ce cas, dès que les conditions d'utilisation du second mode de fonctionnement économique, et en particulier le domaine de vol autorisé, sont réunies sur une partie de la route, le second mode de fonctionnement économique est retenu. Dans le cas contraire, le premier mode de fonctionnement AEO est choisi.

Une seule première route 37 et une seule seconde route 38 sont représentées sur la figure 1. Cependant l'étape de détermination 120 permet de déterminer plusieurs premières routes 37 et plusieurs secondes routes 38, voire une multitude de premières et secondes routes 37,38 couvrant les corridors 32-34.

Les données permettant la détermination de ces premières et secondes routes possibles 37,38 comportent au moins des données relatives à l'aéronef 1 et des données relatives à l'environnement. Ces données sont, par exemple, stockées dans la mémoire 56.

Les données relatives à l'aéronef 1 comportent des données de performance de l'aéronef 1 qui comprennent des premières données de performance correspondant au premier mode de fonctionnement *AEO,* et des secondes données de performance correspondant au second mode de fonctionnement économique. Certaines données de performance peuvent être communes aux deux modes de fonctionnement, telle une puissance requise au vol pour atteindre une vitesse donnée ou encore les capacités calorifiques du carburant utilisé, et d'autres peuvent être différentes et spécifiques pour chaque mode de fonctionnement. Par exemple, les limitations du domaine de vol autorisé, telles que la hauteur et la vitesse d'avancement, ainsi que les puissances disponibles et les consommations de carburant sont spécifiques pour chaque mode de fonctionnement. Ces données de performance peuvent aussi comporter des marges moteur spécifiques à chaque moteur thermique 11 permettant de définir les performances réelles de chaque moteur thermique 11.

Ces données de performances peuvent être prises en compte sous la forme d'abaques déterminant par exemple la puissance disponible et la consommation de carburant de chaque moteur thermique 11 en fonction de la masse de l'aéronef 1, de son altitude, de sa vitesse et/ou des conditions atmosphériques extérieures.

Les données relatives à l'aéronef 1 comportent également des données de santé de l'aéronef 1, notamment au moins deux compteurs moteur caractérisant respectivement des données d'usage des moteurs thermiques 11, et au moins deux compteurs transmission caractérisant respectivement les données d'usage relatives respectivement aux arbres d'entrée 13, et comprenant notamment le nombre de cycles entrée-sortie du second mode de fonctionnement économique de la roue libre de la boîte de transmission principale 12, ou le nombre d'heures de fonctionnement dans le second mode de fonctionnement économique des arbres 13 d'entrée de la boîte de transmission principale 12. D'autres données de santé peuvent également être prise en compte pour le calcul 120 des routes possibles 37,38, telles que l'usage de machines électriques chargées de supporter un ou plusieurs moteurs thermiques 11 dans le second mode de fonctionnement économique par exemple.

Les données relatives à l'environnement comportent des données météorologiques comprenant notamment des données relatives au vent et à la température, voire la pression atmosphérique et la présence d'intempéries entre les points de départ 31 et d'arrivée 35 ainsi que dans les corridors de passage 32-34. Ces données météorologiques peuvent être prises en compte par les données de performances de l'aéronef 1, par exemple les abaques précédemment cités.

Les données relatives à l'environnement comportent aussi des données environnementales telles une base de données terrain. Cette base de données terrain recense les obstacles permanents naturels ou artificiels, voire des obstacles artificiels temporaires. Par exemple, la base de données terrain comporte une montagne 70 telle que représentée sur la figure 1.

La première route 37 et la seconde route 38 représentées sur la figure 1 sont ainsi calculées en fonction de ces différentes données et des paramètres de vol.

Cependant, l'étape de détermination 120 peut conclure que seul un type de routes possibles est réalisable parmi les premières et secondes routes 37,38, en fonction des données et des paramètres de vol. Par exemple, vu la distance entre les points de départ 31 et d'arrivée 35 combiné éventuellement avec une charge utile importante, il peut être impossible de réaliser le vol dans le premier mode de fonctionnement AEO.

Pour des raisons similaires, l'étape de calcul 120 peut conclure qu'aucune route possible n'existe, aussi bien pour le premier mode de fonctionnement AEO que pour le second mode de fonctionnement économique.

Les premières et secondes routes possibles 37,38 peuvent comporter plusieurs segments de vol 41 successifs entre les points de départ 31 et d'arrivée 35, comme représenté sur la figure 1. Chaque segment de vol 41 correspond à une partie de la route possible 37,38 et des caractéristiques du vol de l'aéronef 1 sont associées à chacun de ces segments de vol 41. Ces caractéristiques du vol de l'aéronef 1 associées à chacun de ces segments de vol 41 sont des éléments du plan de vol, tels que l'altitude, la vitesse d'avancement, la position, le cap par exemple, et sont définies lors de l'étape de détermination 120.

Pour les premières routes 37, le calculateur 55 associe le premier mode de fonctionnement AEO à chaque segment de vol 41. Pour les secondes routes 38, le calculateur 55 associe un mode de fonctionnement parmi le second mode de fonctionnement économique et le premier mode de fonctionnement AEO à chaque segment de vol 41, ainsi qu'éventuellement une information indiquant quel moteur thermique 11 parmi les moteurs thermiques 11 doit fournir la puissance mécanique aux rotors 2,3.

Selon les exemples de premières et secondes routes possibles 37,38 affichées sur la figure 1, les données environnementales ont permis d'identifier la montagne 70 située entre les points de départ 31 et d'arrivée 35. Le sommet 72 de la montagne 70 a une altitude supérieure à la hauteur maximale ALTMax définie par le corridor 33. L'altitude du flanc 71 de cette montagne 70 est quant à elle inférieure à cette hauteur minimale ALTMin, et supérieure à la limitation de hauteur maximale ALTMaxEco.

En conséquence, la première route 37 affichée sur la figure 1 a été définie selon quatre segments de vol 41 lors de l'étape de calcul 121, ces quatre segments de vol 41 étant parcourus avec l'aéronef 1 dans le premier mode de fonctionnement AEO. Un segment de décollage 42 démarre au point de départ 31 et respecte le corridor de départ 32. Ensuite, deux segments de croisière 45,46 survolent le flanc 71 et contournent le sommet 72 tout en respectant le corridor de départ 32. Enfin, un segment d'atterrissage 44 se termine au point d'arrivée, en respectant le corridor d'arrivée 34.

La seconde route 38 affichée sur la figure 1 a quant à elle été définie selon trois segments de vol 41 lors de l'étape de calcul 122. Le segment de décollage 42 et le segment d'arrivée 44 sont identiques à ceux de la première route 37 et parcourus avec l'aéronef 1 dans le premier mode de fonctionnement AEO. Ensuite, un segment de croisière 48, situé entre les segments de décollage 42 et le segment d'arrivée 44, contourne la montagne 70 tout en respectant le corridor de croisière 33 ainsi que les limitations de hauteur minimale ALTMinEco et maximale ALTMaxEco. Dès lors, le segment de croisière 48 peut être parcouru avec l'aéronef 1 dans le second mode de fonctionnement économique.

De plus, l'étape de détermination 120 peut comporter une sous-étape supplémentaire d'identification 125 pour identifier une ou plusieurs aires d'atterrissage de secours 36 à proximité de chaque seconde route 38 calculée lors de l'étape de détermination 122. Une telle aire d'atterrissage de secours 36 peut être nécessaire pour la sécurité du vol. Un point de déroutement 39 situé sur la seconde route 38 peut également être défini, l'aéronef 1 devant se diriger vers l'aire d'atterrissage de secours 36 à partir de ce point de déroutement 39. Par exemple, selon l'exemple affiché sur la figure 1, si l'aéronef 1 ne peut pas être utilisé avec le second mode de fonctionnement économique sur la totalité du segment de vol 41, par exemple en cas de changement des conditions météorologiques, il pourrait ne pas avoir suffisamment de carburant pour atteindre le point d'arrivée 35. Dès lors, le plan de vol comporte une aire d'atterrissage de secours 36 et un point de déroutement 39 calculés lors de la sous-étape de détermination 125 permettant à l'aéronef 1 de se dérouter de la seconde route 38 à partir du point de déroutement 39 pour se diriger vers l'aire d'atterrissage de secours 36 afin de s'y poser avant de ne plus avoir de carburant.

Ensuite, le procédé selon l'invention comporte une étape d'estimation 130 réalisée à l'aide d'un calculateur 55 pour estimer un coût opérationnel de chaque première ou seconde route possible 37,38 précédemment déterminée, en fonction de modèles de coût associés aux différents modes de fonctionnement de l'aéronef 1.

Les modèles de coût comportent un premier modèle de coût associé au premier mode de fonctionnement AEO et un second modèle de coût associé au second mode de fonctionnement économique. Ces premier et second modèles de coût permettent de déterminer le coût d'un vol ou d'une partie d'un vol pour chaque première ou seconde route possible 37,38 en fonction du mode de fonctionnement de l'aéronef 1 utilisé sur chaque segment de cette première ou seconde route possible 37,38. Des données économiques peuvent être communes aux deux premier et second modèles de coût, comme par exemple le coût du carburant, le coût de l'heure de vol de l'aéronef 1 et/ou le coût de l'heure de vol d'un pilote.

Lors de cette étape d'estimation 130, le calculateur 55 peut par exemple appliquer la formule suivante pour estimer le coût opérationnel d'une première ou seconde route 37,38 :

Coût de la mission = consommation carburant $\times$ coût du carburant + durée de vol $\times$ (coût horaire pilote + coût horaire de vol aéronef) + coût maintenance moteur + coût de maintenance aéronef.

Les coûts opérationnels reflètent l'effet de chacun des paramètres influant la réalisation du vol. Cependant, ces coûts opérationnels peuvent être à associer aux caractéristiques du vol, en particulier la durée du vol, les conditions environnementales et la charge utile transportée, pour juger et sélectionner le meilleur compromis sur ces coûts opérationnels.

Cette étape d'estimation 130 comprend une sous-étape d'estimation 131 à l'aide du premier modèle de coût d'un premier coût pour chaque première route 37. Une première route 37 est entièrement réalisée dans le premier mode de fonctionnement AEO. Dès lors, uniquement le premier modèle de coût est nécessaire pour estimer le coût opérationnel d'une première route 37.

Cette étape d'estimation 130 comprend également une sous-étape d'estimation 132 à l'aide du premier modèle de coût et du second modèle de coût d'un second coût pour chaque seconde route 38. Une seconde route 38 est réalisée partiellement dans le premier mode de fonctionnement AEO et dans le second mode de fonctionnement économique. Dès lors, les deux premier et second modèles de coût sont nécessaires pour estimer le coût opérationnel d'une seconde route 38.

Le procédé selon l'invention comporte alors une étape de comparaison 140 réalisée à l'aide du calculateur 55 pour comparer les premiers et seconds coûts précédemment estimés

Cette étape de comparaison 140 permet de classer les différentes premières et secondes routes selon leurs premiers et seconds coûts respectifs en fonction d'un ou de plusieurs critères. Par exemple, une comparaison des premiers et seconds coûts peut être effectuée sur le seul critère de la valeur de chacun des premiers et seconds coûts des premières et secondes routes déterminées. Alternativement, une comparaison des premiers et seconds coûts peut en plus prendre en considération au moins un critère complémentaire, choisi par exemple parmi la durée de vol, les nuisances environnementales, les conditions météorologiques, la disponibilité d'aires d'atterrissage de secours.

Enfin, une étape de sélection 150 est réalisée avec le calculateur 55 pour sélectionner une route parmi les premières et secondes routes possibles 37,38 précédemment déterminées suite à l'étape de comparaison 140 des premiers et seconds coûts.

La route sélectionnée peut être par exemple choisie parmi les premières et secondes routes 37,38 sur le seul critère du coût opérationnel. La route sélectionnée est dans ce cas la première ou seconde route possible 37,38 ayant le coût opérationnel le plus faible.

Alternativement, la route sélectionnée peut être choisie parmi la ou les premières routes 37 et la ou les secondes routes 38 en combinant le critère du coût opérationnel avec au moins un critère complémentaire.

Dans tous les cas, l'étape de sélection 150 peut comporter, par exemple, une simulation de Monte Carlo afin de choisir lors d'une première itération une quantité finie de route. Ce choix est réalisé de manière orientée et non aléatoire par un échantillonneur *TPE* permettant avantageusement de sélectionner des premières et secondes routes possibles 37,38 de manière à converger vers l'objectif requis. Ensuite, au cours de la ou des itérations suivantes, en utilisant les résultats des simulations précédentes, le calculateur 55 peut alors obtenir directement la route ayant le coût opérationnel le plus faible parmi la ou les premières routes 37 et la ou les secondes routes 38. Le calculateur 55 peut éventuellement identifier de façon alternative la première route 37 ayant le coût opérationnel le plus faible parmi plusieurs secondes routes 37 et la seconde route 38 ayant le coût opérationnel le plus faible parmi plusieurs secondes routes 38.

Alternativement, la route sélectionnée peut être choisie parmi la ou les premières routes 37 et la ou les secondes routes 38 en combinant le critère du coût opérationnel avec au moins un des critères complémentaires.

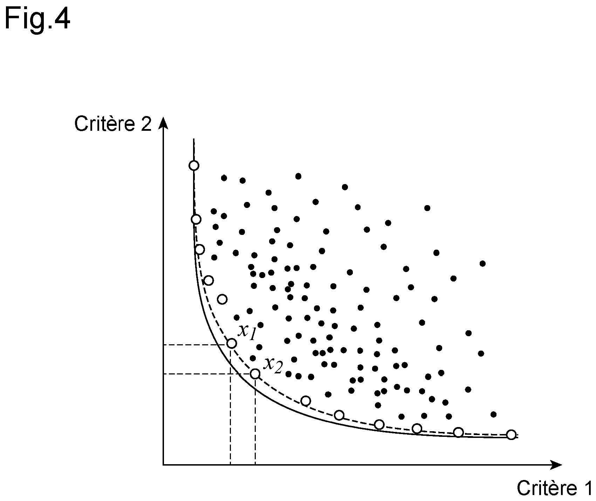

Par exemple, la figure 4 représente les coûts opérationnels d'une multitude de routes possibles, comprenant des premières routes 37 et des secondes routes 38, dans un repère ayant par exemple le coût opérationnel des première et secondes routes possibles 37,38 en abscisse et un critère complémentaire en ordonnée. Dans l'exemple représenté, les coûts opérationnels $x_1$ et $x_2$ sont ceux représentant les meilleurs compromis entre le coût opérationnel et ce critère complémentaire. Dans cet exemple, un échantillonneur *TPE* dédié au multi objectif peut être utilisé pour identifier ces deux coûts opérationnels $x_1$ et $x_2$, qui appartiennent au front de Pareto des résultats de la simulation de Monte Carlo. La sélection entre les coûts opérationnels $x_1$ et $x_2$ peut alors être effectuée en fonction du critère à privilégier parmi le coût opérationnel et ce critère complémentaire, cette sélection étant de préférence effectuée de façon automatique par le calculateur 55 pour obtenir la route sélectionnée.

Le procédé peut comporter une étape optionnelle d'affichage 155 pour afficher la route sélectionnée sur le dispositif d'affichage 59 afin d'en informer, par exemple, l'opérateur de l'aéronef 1. L'étape optionnelle d'affichage 155 peut éventuellement comprendre un premier affichage de la première route 37 ayant le coût opérationnel le plus faible parmi plusieurs premières routes 37 et un second affichage de la seconde route 38 ayant le coût opérationnel le plus faible parmi plusieurs secondes routes 38. L'opérateur peut ainsi se rendre compte des différences entre ces premières et secondes deux routes possibles 37,38 ayant les coûts opérationnels optimums.

Chaque première ou seconde route 37,38 peut être affichée en deux dimensions, selon une vue de dessus sur le dispositif d'affichage 59.

Le procédé peut ensuite comporter une étape de déplacement 170 de l'aéronef 1 pour effectuer un vol entre les points de départ 31 et d'arrivée 35 selon la route sélectionnée.

Dans ce but, le procédé peut aussi comporter une étape de transmission 160 du plan de vol, et en particulier de la route sélectionnée, à un dispositif de gestion de vol 15 de l'aéronef 1 en vue de la réalisation de l'étape de déplacement 170. La transmission des caractéristiques relatives au plan de vol est effectuée préalablement à l'aide de l'émetteur d'informations 51 qui coopère avec le dispositif de réception 18 de l'aéronef 1. Le dispositif de réception 18 reçoit ainsi les caractéristiques du plan de vol, et en particulier les caractéristiques de la route sélectionnée, puis les transfère au dispositif de gestion de vol 15 de l'aéronef 1 en vue de la réalisation d'un vol de l'aéronef 1 suivant cette route sélectionnée.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

**Revendications**

1. Procédé de routage pour un aéronef (1) muni d'au moins un rotor (2,3) et d'au moins deux moteurs thermiques (11) entraînant en rotation ledit au moins un rotor (2,3), ledit aéronef (1) possédant un régulateur configuré pour réguler lesdits moteurs thermiques (11) au moins selon un premier mode de fonctionnement, dans lequel lesdits moteurs thermiques (11) fournissent chacun une puissance mécanique non nulle audit au moins un rotor (2,3) et conjointement une puissance mécanique requise audit au moins un rotor (2,3), et un second mode de fonctionnement dans lequel au moins un desdits moteurs thermiques (11) ne fournit pas de puissance mécanique audit au moins un rotor (2,3),

**caractérisé en ce que** ledit procédé comporte les étapes suivantes :

- paramétrage (110) de paramètres d'un plan de vol comprenant :

  ◦ un point de départ (31) dudit plan de vol, et
  ◦ un point d'arrivée (35) dudit plan de vol, et

- détermination (120) à l'aide d'un calculateur (55) de plusieurs routes possibles (37,38) entre ledit point de départ (31) et ledit point d'arrivée (35), en fonction desdits paramètres dudit plan de vol et de plusieurs données comprenant au moins des données de performance dudit aéronef (1), des données de santé dudit aéronef (1), des données météorologiques, et des données environnementales, ladite détermination (120) comprenant :

  ◦ détermination (121) d'au moins une première route (37) utilisant uniquement ledit premier mode de fonctionnement,
  ◦ détermination (122) d'au moins une seconde route (38) utilisant ledit second mode de fonctionnement et ledit premier mode de fonctionnement,

- estimation (130) à l'aide dudit calculateur (55) d'un coût opérationnel de chaque première et seconde route possible (37,38) en fonction de modèles de coût associés aux différents modes de fonctionnement dudit aéronef (1), ladite estimation (130) comprenant :

  ◦ estimation (131) d'au moins un premier coût associé respectivement à ladite au moins une première route,
  ◦ estimation (132) d'au moins un second coût associé respectivement à ladite au moins une seconde route,

- comparaison (140) desdits premier et second coûts,
- sélection (150) à l'aide dudit calculateur (55) d'une route parmi lesdites première et seconde routes (37,38) selon ladite comparaison desdits premier et second coûts,
- transmission (160) de la route sélectionnée à un dispositif de gestion de vol (15) dudit aéronef (1).

2. Procédé selon la revendication 1,
   pour lequel ledit procédé comporte un déplacement (170) dudit aéronef (1) entre lesdits points de départ (31) et d'arrivée (33) selon ladite route sélectionnée.

3. Procédé selon l'une quelconque des revendications 1 à 2, pour lequel

   lesdites données de performance dudit aéronef (1) comprennent :

   ◦ des premières données de performance correspondant audit premier mode de fonctionnement dudit aéronef (1), et
   ◦ des secondes données de performance correspondant audit second mode de fonctionnement dudit aéronef (1),

   lesdites données de santé dudit aéronef (1) comprennent :

   ◦ un compteur moteur associé à chaque moteur thermique (11), ledit compteur moteur comptabilisant au moins une donnée d'usage dudit moteur thermique (11), et
   ◦ au moins deux compteurs transmission associés respectivement à des arbres (13) d'entrée d'une boîte de transmission principale (12) agencée entre lesdits moteurs thermiques (11) et ledit au moins un rotor (2,3), lesdits arbres (13) d'entrée étant reliés mécaniquement respectivement auxdits moteurs thermiques (11), chaque compteur transmission comptabilisant au moins une donnée d'usage d'un desdits arbres (13) d'entrée,

   lesdites données météorologiques comprennent des données relatives au vent et à la température entre lesdits points de départ (31) et d'arrivée (35), et
   lesdites données environnementales comprennent une base de données terrain.

4. Procédé selon l'une quelconque des revendications 1 à 3, pour lequel ladite au moins une seconde route comporte plusieurs segments de vol successifs entre lesdits points de départ (51) et d'arrivée (55), et ledit calculateur (55) détermine pour chaque segment un mode de fonctionnement dudit aéronef (1) parmi lesdits premier et second modes de fonctionnement associé en fonction de caractéristiques dudit segment et desdites données.

5. Procédé selon la revendication 4,
pour lequel ledit calculateur (55) détermine pour chaque segment, pour lequel ledit second mode de fonctionnement est associé, une information indiquant ledit moteur thermique (11) parmi lesdits moteurs thermiques (11) fournissant ladite puissance mécanique audit au moins un rotor (2,3).

6. Procédé selon l'une quelconque des revendications 1 à 5, pour lequel ledit second mode de fonctionnement comporte un premier mode d'utilisation pour lequel un seul moteur thermique (11) parmi lesdits moteurs thermiques (11) fonctionne et assure seul l'entraînement en rotation dudit au moins un rotor (2,3), ledit au moins un autre moteur thermique (11) étant arrêté et non alimenté en carburant et un second mode d'utilisation pour lequel un seul moteur thermique (11) parmi lesdits moteurs thermiques (11) fournit une puissance mécanique audit au moins un rotor (2,3) pour l'entraîner en rotation, ledit au moins un autre moteur thermique (11) étant démarré et alimenté en carburant, ne fournissant aucune puissance mécanique audit au moins un rotor (2,3).

7. Procédé selon l'une quelconque des revendications 1 à 5, pour lequel ladite sélection (150) d'une route parmi lesdites premières et secondes routes (37,38) est effectuée sur le seul critère dudit coût opérationnel, la route sélectionnée étant la route possible (37,38) ayant ledit premier ou second coût le plus faible.

8. Procédé selon l'une quelconque des revendications 1 à 5, pour lequel ladite sélection (150) d'une route parmi lesdites premières et secondes routes (37,38) est effectuée sur le critère du coût opérationnel combiné avec au moins un critère complémentaire.

9. Procédé selon la revendication 8,
pour lequel ledit au moins un critère complémentaire est choisi parmi une durée de vol, des nuisances environnementales, des conditions météorologiques, une disponibilité d'aires d'atterrissage de secours.

10. Procédé selon l'une quelconque des revendications 1 à 9, pour lequel ledit procédé comporte une étape d'identification (125) d'une ou de plusieurs aires d'atterrissage de secours (36) sur ladite au moins une seconde route (38), dans le cas où ledit second mode de fonctionnement ne peut pas être réalisé sur au moins une partie de ladite route sélectionnée.

11. Procédé selon l'une quelconque des revendications 1 à 10, pour lequel ledit procédé comporte une étape d'affichage (155) pour afficher ladite route sélectionnée sur un dispositif d'affichage (59).

12. Procédé selon la revendication 11,
pour lequel ladite étape d'affichage (155) comprend un premier affichage de ladite première route (37) ayant le coût opérationnel le plus faible parmi plusieurs premières routes (37) et un second affichage de ladite seconde route (38) ayant le coût opérationnel le plus faible parmi plusieurs secondes routes (38).

13. Programme d'ordinateur comprenant des instructions qui, lorsque ledit programme est exécuté, conduisent à mettre en œuvre le procédé selon l'une quelconque des revendications 1 à 12.

14. Système (50) de routage pour aéronef (1) muni d'au moins un rotor (2,3) et d'au moins deux moteurs thermiques (11) entraînant en rotation ledit au moins un rotor (2,3), ledit aéronef (1) possédant un second mode de fonctionnement dans lequel au moins un desdits moteurs thermiques (11) ne fournit pas de puissance mécanique audit au moins un rotor (2,3), ledit système (50) comportant :

- au moins un calculateur (55), et
- au moins une mémoire (56) stockant au moins une base de données,

**caractérisé en ce que** ledit système (50) de routage est configuré pour mettre en œuvre le procédé de routage pour aéronef selon l'une quelconque des revendications 1 à 12.

15. Ensemble de routage (20) comportant un aéronef (1) et un système (50) de routage selon la revendication 14,

**caractérisé en ce que** ledit aéronef (1) comporte au moins un dispositif de réception (18) et au moins un dispositif de gestion de vol (15) relié audit dispositif de réception (18), ledit système (50) de routage comporte au moins un émetteur d'informations (51) configuré pour coopérer avec ledit dispositif de réception (18) dudit aéronef (1) afin de transmettre des caractéristiques dudit plan de vol et ladite route sélectionnée audit dispositif de réception (18) qui les transfère audit dispositif de gestion de vol (15).

**16.** Aéronef (1),
**caractérisé en ce que** ledit aéronef (1) comporte un système (50) de routage selon la revendication 14.

**Patentansprüche**

**1.** Routingverfahren für ein Luftfahrzeug (1), das mit mindestens einem Rotor (2, 3) und mindestens zwei Verbrennungsmotoren (11) ausgestattet ist, die den mindestens einen Rotor (2, 3) in Drehung versetzen, wobei das Luftfahrzeug (1) einen Regler aufweist, der konfiguriert ist, um die Verbrennungsmotoren (11) zumindest in einem ersten Betriebsmodus, in dem die Verbrennungsmotoren (11) jeweils eine von Null verschiedene mechanische Leistung an den mindestens einen Rotor (2, 3) liefern und gemeinsam eine erforderliche mechanische Leistung an den mindestens einen Rotor (2, 3) liefern, sowie in einem zweiten Betriebsmodus zu regeln, in dem mindestens einer der Verbrennungsmotoren (11) keine mechanische Leistung an den mindestens einen Rotor (2, 3) liefert,
**dadurch gekennzeichnet, dass** das Verfahren die folgenden Schritte umfasst:

- Festlegen (110) von Parametern eines Flugplans, darunter:

  ○ ein Startpunkt (31) des Flugplans und
  ○ einen Zielpunkt (35) des Flugplans, und

- Bestimmen (120) mehrerer möglicher Routen (37, 38) zwischen dem Startpunkt (31) und dem Zielpunkt (35) mithilfe eines Rechners (55), in Abhängigkeit von den Parametern des Flugplans und mehreren Daten, die mindestens Leistungsdaten des Luftfahrzeugs (1), Zustandsdaten des Luftfahrzeugs (1), Wetterdaten und Umgebungsdaten umfassen, wobei das Bestimmen (120) umfasst:

  ○ Bestimmen (121) mindestens einer ersten Route (37), die ausschließlich den ersten Betriebsmodus nutzt,
  ○ Bestimmen (122) mindestens einer zweiten Route (38), die den zweiten Betriebsmodus und den ersten Betriebsmodus nutzt,
  ○ Schätzen (130) mittels des Rechners (55) von Betriebskosten für jede mögliche erste und zweite Route (37, 38) auf der Grundlage von Kostenmodellen, die den verschiedenen Betriebsmodi des Luftfahrzeugs (1) zugeordnet sind, wobei das Schätzen (130) umfasst:

    ■ Schätzen (131) mindestens eines ersten Kostenwerts, der jeweils der mindestens einen ersten Route zugeordnet ist,
    ■ Schätzen (132) mindestens eines zweiten Kostenwerts, der jeweils der mindestens einen zweiten Route zugeordnet ist,

  ○ Vergleichen (140) des ersten und des zweiten Kostenwerts,
  ○ Auswählen (150) einer der ersten und zweiten Routen (37, 38) mithilfe des Rechners (55) anhand des Vergleich der ersten und zweiten Kosten,
  ○ Senden (160) der ausgewählten Route an eine Flugmanagementeinrichtung (15) des Luftfahrzeugs (1).

**2.** Verfahren nach Anspruch 1,
wobei das Verfahren eine Bewegung (170) des Luftfahrzeugs (1) zwischen dem Startpunkt (31) und dem Zielpunkt (33) gemäß der ausgewählten Route umfasst.

**3.** Verfahren nach einem der Ansprüche 1 bis 2,

bei dem die Leistungsdaten des Luftfahrzeugs (1) umfassen:

- erste Leistungsdaten, die dem ersten Betriebsmodus des Luftfahrzeugs (1) entsprechen, und
- zweite Leistungsdaten, die dem zweiten Betriebsmodus des Luftfahrzeugs (1) entsprechen,

wobei die Zustandsdaten des Luftfahrzeugs (1) umfassen:

• einen jedem Verbrennungsmotor (11) zugeordneten Motorzähler, wobei der Motorzähler mindestens einen Nutzungswert des Verbrennungsmotors (11) erfasst, und
• mindestens zwei Getriebezähler, die jeweils den Eingangswellen (13) eines Hauptgetriebes (12) zugeordnet sind, das zwischen den Verbrennungsmotoren (11) und dem mindestens einen Rotor (2, 3) angeordnet ist, wobei die Eingangswellen (13) jeweils mechanisch mit den Verbrennungsmotoren (11) verbunden sind, wobei jeder Getriebezähler mindestens einen Betriebswert einer der genannten Eingangswellen (13) erfasst,

und die Wetterdaten Daten zu Wind und Temperatur zwischen den genannten Start- (31) und Zielpunkten (35) umfassen, und die Umgebungsdaten eine Geländedatenbank umfassen.

4. Verfahren nach einem der Ansprüche 1 bis 3, bei dem
die mindestens eine zweite Route mehrere aufeinanderfolgende Flugsegmente zwischen Start- (51) und Zielpunkt (55) umfasst, und der Rechner (55) für jedes Segment in Abhängigkeit von den Merkmalen des Segments und den Daten einen Betriebsmodus des Luftfahrzeugs (1) aus dem ersten und dem zweiten zugeordneten Betriebsmodus bestimmt.

5. Verfahren nach Anspruch 4, bei dem
der Rechner (55) für jedes Segment, dem der zweite Betriebsmodus zugeordnet ist, eine Information ermittelt, die angibt, welcher der Verbrennungsmotoren (11) die mechanische Leistung an den mindestens einen Rotor (2, 3) liefert.

6. Verfahren nach einem der Ansprüche 1 bis 5, bei dem
der zweite Betriebsmodus einen ersten Nutzungsmodus, bei dem nur ein einziger Verbrennungsmotor (11) unter den Verbrennungsmotoren (11) in Betrieb ist und allein den Drehantrieb des mindestens einen Rotors (2, 3) gewährleistet, wobei der mindestens eine weitere Verbrennungsmotor (11) abgeschaltet ist und nicht mit Kraftstoff versorgt wird, sowie einen zweiten Nutzungsmodus umfasst, bei dem ein einziger Verbrennungsmotor (11) unter den Verbrennungsmotoren (11) dem mindestens einen Rotor (2, 3) mechanische Drehantriebsleistung liefert, wobei der mindestens eine weitere Verbrennungsmotor (11) gestartet ist und mit Kraftstoff versorgt wird, ohne dem mindestens einen Rotor (2, 3) mechanische Leistung zuzuführen.

7. Verfahren nach einem der Ansprüche 1 bis 5, bei dem
die Auswahl (150) einer Route unter den ersten und zweiten Routen (37, 38) allein auf der Grundlage der Betriebskosten erfolgt, wobei die ausgewählte Route die mögliche Route (37, 38) mit den niedrigsten ersten oder zweiten Kosten ist.

8. Verfahren nach einem der Ansprüche 1 bis 5, bei dem
das Auswählen (150) einer Route aus den ersten und zweiten Routen (37, 38) auf der Grundlage der Betriebskosten in Kombination mit mindestens einem zusätzlichen Kriterium erfolgt.

9. Verfahren nach Anspruch 8, bei dem
das mindestens eine zusätzliche Kriterium aus Flugdauer, Umweltbelastung, Wetterbedingungen und Verfügbarkeit von Notlandeplätzen ausgewählt wird.

10. Verfahren nach einem der Ansprüche 1 bis 9, wobei
das Verfahren einen Schritt (125) des Identifizierens eines oder mehrerer Notlandeplätze (36) auf der mindestens einen zweiten Route (38) für den Fall umfasst, dass der zweite Betriebsmodus auf mindestens einem Teil der ausgewählten Route nicht realisierbar ist.

11. Verfahren nach einem der Ansprüche 1 bis 10, wobei das Verfahren einen Anzeigeschritt (155) zum Anzeigen der ausgewählten Route auf einer Anzeigevorrichtung (59) umfasst.

12. Verfahren nach Anspruch 11, bei dem der Anzeigeschritt (155) ein erstes Anzeigen der ersten Route (37) mit den niedrigsten Betriebskosten unter mehreren ersten Routen (37) und ein zweites Anzeigen der zweiten Route (38) mit den niedrigsten Betriebskosten unter mehreren zweiten Routen (38) umfasst.

**13.** Computerprogramm, das Befehle umfasst, die bei Ausführung des Programms bewirken, dass das Verfahrens gemäß einem der Ansprüche 1 bis 12 ausgeführt wird.

**14.** Routing-System (50) für ein Luftfahrzeug (1), das mit mindestens einem Rotor (2, 3) und mindestens zwei Verbrennungsmotoren (11) ausgestattet ist, die den mindestens einen Rotor (2, 3) in Drehung versetzen, wobei das Luftfahrzeug (1) einen zweiten Betriebsmodus aufweist, in dem mindestens einer der Verbrennungsmotoren (11) keine mechanische Leistung an den mindestens einen Rotor (2, 3) liefert, wobei das System (50) umfasst:

• mindestens einen Rechner (55) und
• mindestens einen Speicher (56), der mindestens eine Datenbank speichert,

**dadurch gekennzeichnet, dass** das Routingsystem (50) konfiguriert ist, um das Routingverfahren für Luftfahrzeuge nach einem der Ansprüche 1 bis 12 auszuführen.

**15.** Routing-Anordnung (20) mit einem Luftfahrzeug (1) und einem Routing-System (50) nach Anspruch 14, **dadurch gekennzeichnet, dass** das Luftfahrzeug (1) mindestens eine Empfangseinrichtung (18) und mindestens eine mit der Empfangseinrichtung (18) verbundene Flugmanagementeinrichtung (15) umfasst, wobei das Routing-System (50) mindestens einen Informationssender (51) umfasst, der konfiguriert ist, um mit der Empfangseinrichtung (18) des Luftfahrzeugs (1) zusammenzuwirken, um Merkmale des Flugplans und der ausgewählten Route an die Empfangseinrichtung (18) zu übertragen, die diese an die Flugmanagementeinrichtung (15) weiterleitet.

**16.** Luftfahrzeug (1), **dadurch gekennzeichnet, dass** das Luftfahrzeug (1) ein Routing-System (50) nach Anspruch 14 umfasst.

## Claims

**1.** Routing method for an aircraft (1) provided with at least one rotor (2,3) and at least two combustion engines (11) rotating said at least one rotor (2,3), said aircraft (1) having a regulator configured to regulate said combustion engines (11) at least according to a first operating mode, wherein said combustion engines (11) each provide a non-zero mechanical power to said at least one rotor (2,3) and together, a mechanical power required at said at least one rotor (2,3), and a second operating mode, wherein at least one of said combustion engines (11) does not provide mechanical power to said at least one rotor (2,3),
**characterised in that** said method comprises the following steps:

- configuring (110) of parameters of a flight plan comprising:

  ◦ a starting point (31) of said flight plan, and
  ◦ an arrival point (35) of said flight plan, and

- determining (120), using a calculator (55) of several possible routes (37,38) between said starting point (31) and said arrival point (35), as a function of said parameters of said flight plan and of several pieces of data comprising at least performance data of said aircraft (1), health data of said aircraft (1), meteorological data, and environmental data, said determination (120) comprising:

  ◦ determining (121) of at least one first route (37) only using said first operating mode,
  ◦ determining (122) of at least one second route (38) using said second operating mode and said first operating mode,

- estimating (130) using said calculator (55) of an operational cost of each first and second possible route (37,38) as a function of cost models associated with the different operating modes of said aircraft (1), said estimation (130) comprising:

  ◦ estimation (131) of at least one first cost, respectively associated with said at least one first route,
  ◦ estimation (132) of at least one second cost, respectively associated with said at least one second route,

- comparing (140) of said first and second costs,
- selecting (150) using said calculator (55) of a route from among said first and second routes (37,38) according to said comparison of said first and second costs,
- transmitting (160) of the selected route to a flight management device (15) of said aircraft (1).

2. Method according to claim 1,
for which said method comprises a movement (170) of said aircraft (1) between said starting (31) and arrival (33) points according to said selected route.

3. Method according to any one of claims 1 to 2,

for which
said performance data of said aircraft (1) comprise:

○ first performance data corresponding to said first operating mode of said aircraft (1), and
○ second performance data corresponding to said second operating mode of said aircraft (1),

said health data of said aircraft (1) comprise:

○ an engine counter associated with each combustion engine (11), said engine counter accounting for at least one piece of usage data of said combustion engine (11), and
○ at least two transmission counters associated respectively with input shafts (13) of a main transmission box (12) arranged between said combustion engines (11) and said at least one rotor (2,3), said input shafts (13) being mechanically connected, respectively to said combustion engines (11), each transmission counter accounting for at least one piece of usage data of one of said input shafts (13),

said meteorological data comprise data relating to the wind and to the temperature between said starting (31) and arrival (35) points, and
said environmental data comprise a land database.

4. Method according to any one of claims 1 to 3,
for which said at least one second route comprises several successive flight segments between said starting (51) and arrival (55) points, and said calculator (55) determines, for each segment, an operating mode of said aircraft (1) among said first and second associated operating modes as a function of features of said segment and of said data.

5. Method according to claim 4,

for which said calculator (55) determines, for each segment, for which said second operating mode is associated, a piece of information indicating said combustion engine (11) among said combustion engines (11) providing said mechanical power to said at least one rotor (2,3).

6. Method according to any one of claims 1 to 5,
for which said second operating mode comprises a first mode of use for which one single combustion engine (11) among said combustion engines (11) operates and ensures only the rotation of said at least one rotor (2,3), said at least one other combustion engine (11) being stopped and not provided with fuel and a second mode of use for which one single combustion engine (11) among said combustion engines (11) provides a mechanical power to said at least one rotor (2,3) to rotate it, said at least one other combustion engine (11) being started and provided with fuel, not providing any mechanical power to said at least one rotor (2,3).

7. Method according to any one of claims 1 to 5,
for which said selection (150) of a route among said first and second routes (37,38) is done on the only criterion of said operational cost, the selected route being the possible route (37,38) having said first or second lowest cost.

8. Method according to any one of claims 1 to 5,
for which said selection (150) of a route among said first and second routes (37,38) is done on the criterion of the combined operational cost with at least one complementary criterion.

9. Method according to claim 8,
for which said at least one complementary criterion is chosen from among a flight duration, environmental damage, meteorological conditions, an availability of emergency landing areas.

10. Method according to any one of claims 1 to 9,
for which said method comprises a step (125) of identifying one or more emergency landing areas (36) on said at least one second route (38), in the case where said second operating mode cannot be performed on at least one part of said selected route.

11. Method according to any one of claims 1 to 10, for which said method comprises a display step (155) for displaying said selected route on a display device (59).

12. Method according to claim 11,
for which said display step (155) comprises a first display of said first route (37) having the lowest operational cost among several first route (37) and a second display of said second route (38) having the lowest operational cost among several second routes (38).

13. Computer program comprising instructions which, when said program is executed, lead to implementing the method according to any one of claims 1 to 12.

14. Routing system (50) for aircraft (1) provided with at least one rotor (2,3) and at least two combustion engines (11) rotating said at least one rotor (2,3), said aircraft (1) having a second operating mode, wherein at least one of said combustion engines (11) does not provide mechanical power to said at least one rotor (2,3), said system (50) comprising:

   - at least one calculator (55), and
   - at least one memory (56) storing at least one database,

   **characterised in that** said routing system (50) is configured to implement the routing method for an aircraft, according to any one of claims 1 to 12.

15. Routing assembly (20) comprising an aircraft (1) and a routing system (50) according to claim 14,
   **characterised in that** said aircraft (1) comprises at least one receiving device (18) and at least one flight management device (15) connected to said receiving device (18), said routing system (50) comprises at least one information emitter (51) configured to engage with said receiving device (18) of said aircraft (1), in order to transmit features of said flight plan and said selected route to said receiving device (18) which transfers them to said flight management device (15).

16. Aircraft (1),
   **characterised in that** said aircraft (1) comprises a routing system (50) according to claim 14.

Fig.1

## Fig.2

## Fig.3

Fig.4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 10262545 B
- EP 2763083 A
- US 20200362753 A
- US 20220122468 A
- US 9193442 B